# FASCICULE DE BREVET EUROPEEN

(11) **EP 2 257 470 B1**
(45) Date de publication et mention de la délivrance du brevet: **28.03.2012**
(21) Numéro de dépôt: 09726195.2
(22) Date de dépôt: 20.02.2009
(51) Int. Cl.: B64D 27/26

(54) **STRUCTURE PRIMAIRE D'UN MÂT D'ACCROCHAGE**
PRIMÄRSTRUKTUR EINER VERBINDUNGSSTREBE
PRIMARY STRUCTURE OF A CONNECTING STRUT

(30) Priorité: 28.03.2008 FR 0801718
(43) Date de publication de la demande: 08.12.2010
(73) Titulaire: Aircelle, 76700 Gonfreville l'Orcher (FR)
(72) Inventeur: VACHE, Jean-Bernard, F-76600 Le Havre (FR)
(74) Mandataire: Gaillarde, Frédéric F. Ch.
(86) Numéro de dépôt international: PCT/FR2009/000189
(87) Numéro de publication internationale: WO 2009/118469

(56) Documents cités:
- EP-A- 1 266 826
- FR-A- 2 889 505
- FR-A- 2 891 246

## Description

L'invention se rapporte à une structure de reprise d'effort d'un mât d'accrochage destiné à rattacher un turboréacteur à une voilure d'un aéronef.

Un mât d'accrochage a pour rôle d'assurer la liaison entre un turboréacteur et la voilure d'un aéronef. De ce fait, sur une première extrémité, le mât d'accrochage est rattaché au turboréacteur par une attache arrière et par une attache avant en forme de pyramide. Sur une seconde extrémité, le mât d'accrochage est rattaché à une voilure de l'aéronef par une attache avant, une attache arrière et une attache supérieure, dite « spigot ».

Le mât d'accrochage est, de façon connue, conçu pour permettre la transmission à la voilure des efforts statiques et dynamiques engendrés par le turboréacteur, tels que le poids ou la poussée.

Afin de transmettre ces efforts, le mât d'accrochage comporte une structure rigide, appelée « structure de reprise d'effort » ou « structure primaire » et également une pluralité de structures, dites « secondaires », complémentaires de la structure primaire.

Les structures secondaires assurent la ségrégation et le maintien de systèmes, tels que les systèmes hydrauliques, électriques, d'acheminement du carburant, de conditionnement. Ces structures secondaires supportent, par ailleurs, des éléments de carénage aérodynamique sous forme de panneaux rapportés sur les structures secondaires.

De manière usuelle, le turboréacteur est entouré d'une nacelle pouvant comprendre des moyens d'inversion de poussée. La structure primaire porte généralement les capots de la nacelle tandis que les structures secondaires portent les capots de soufflante du turboréacteur.

La structure primaire est rigide comparativement aux structures secondaires afin de reprendre les efforts statiques et dynamiques engendrés par le turboréacteur. Au contraire, les structures secondaires ne sont pas destinées à reprendre de tels efforts.

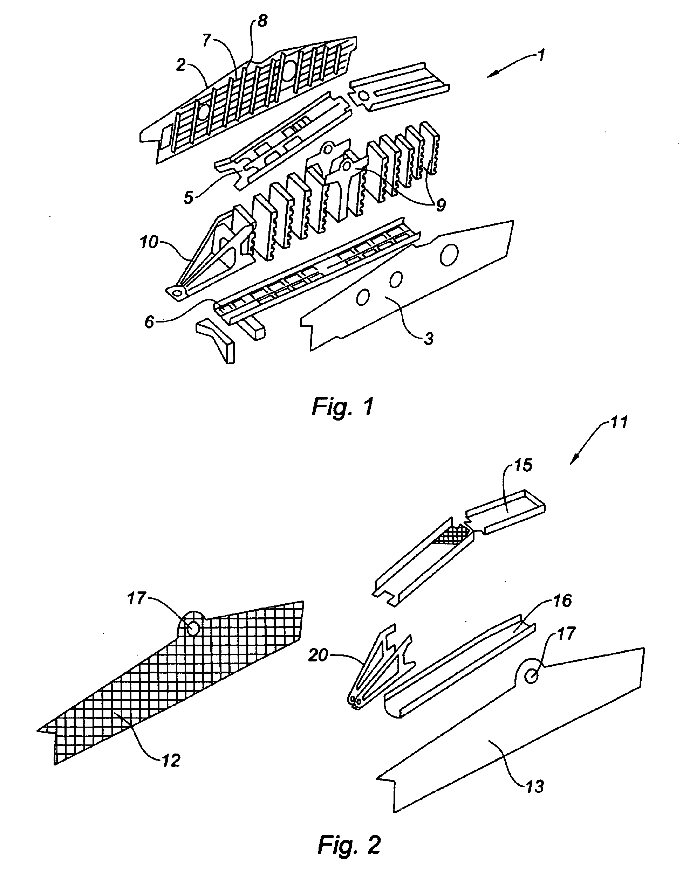

De manière ciassique, la structure primaire 1 se présente sous la forme d'un « caisson » formé par deux panneaux latéraux métalliques 2 et 3 (voir figure 1), par un longeron métallique supérieur 5 et par un longeron métallique inférieur 6. Les longerons 5 et 6 sont configurés pour relier respectivement les parties supérieure et inférieure des panneaux latéraux 2 et 3. Des raidisseurs longitudinaux 7 et transversaux 8 présents sur chaque panneau latéral 2 et 3 assurent la rigidité de la structure primaire 1.

A l'intérieur du caisson, une multitude de cadres de renfort 9 sont disposés entre les longerons métalliques 5 et 6 et les panneaux latéraux 2 et 3.

A une extrémité de la structure primaire 1, une pyramide 10 est rapportée sur le cadre de renfort 9 extrémal. La pyramide 10 comporte une attache destinée à rattacher la structure primaire 1 au turboréacteur.

Cependant, ce type de structure primaire présente l'inconvénient d'une mise en oeuvre et d'une installation sur une voilure d'un aéronef complexes et longues.

Afin de simplifier la mise en oeuvre et l'installation des structures primaires d'un mât d'accrochage, on propose dans la demande de brevet FR 2 889 505 une structure primaire 11 (voir figure 2) comportant deux parois latérales 12 et 13 en matériau composite, un longeron supérieur 15 et un longeron inférieur 16. Une pyramide 20 située à une extrémité de la structure primaire 11 comporte une attache destinée à rattacher ladite structure 11 au turboréacteur. Ce type de structure primaire 11 ne présente plus de raidisseur longitudinal ou transversal ni de cadre de renfort.

Néanmoins, ce type de structure primaire présente l'inconvénient de ne pas garantir une sécurité satisfaisante en cas d'incendie du turboréacteur. En effet, en cas d'incendie du turboréacteur, il est important que la structure primaire supporte le turboréacteur durant un temps défini par la réglementation européenne et/ou américaine, typiquement de l'ordre de 15 minutes selon la norme américaine FAA-AC 25-865. Or, le type de structure primaire décrit dans la demande de brevet FR 2 889 505 a tendance à rompre avant la fin de cette durée.

De plus, ce type de structure primaire présente l'inconvénient de ne pas reprendre les efforts selon l'axe principal, à savoir selon la longueur de ia structure primaire. L'attache supérieure (ou « spigot ») à la voilure est insérée dans deux ouvertures 17 montées en saillie sur les parois latérales 12 et 13. Une telle configuration a tendance à fragiliser le mât d'accrochage.

Un but de la présente invention est donc de fournir une structure primaire d'un mât d'accrochage augmentant la durée de support du turboréacteur en cas d'incendie.

Un autre but de la présente invention est de fournir une structure primaire de mât d'accrochage plus résistante aux efforts et plus facile à fabriquer et à monter sur une voilure d'un aéronef.

A cet effet, selon un premier aspect, l'invention a pour objet une structure primaire d'un mât d'accrochage destiné à rattacher un turboréacteur à une voilure d'un aéronef, caractérisée en ce qu'elle comprend un premier bloc latéral et un second bloc latéral, lesdits blocs latéraux enserrant une plaque centrale fabriquée dans un matériau résistant à une température au moins égale à 1000°C pendant une durée au moins égale à 15 minutes.

L'invention a pour objet une structure de reprise d'effort d'un mât d'accrochage destiné à rattacher un turboréacteur à une voilure d'un aéronef, caractérisée en ce qu'elle comprend un premier bloc latéral et un second bloc latéral, destinés à être rattachés à la voilure de l'aéronef, une pièce d'attache destinée à être rattachée au turboréacteur, lesdits blocs latéraux enserrant une plaque centrale de forme sensiblement allongée suivant l'axe principal de ladite structure et ladite plaque étant reliée à ladite pièce d'attache, la plaque centrale étant fabriquée dans un métal ou un alliage comprenant du nickel apte à résister à une température au moins égale à 1 000°C pendant une durée au moins égale à 15 minutes, de sorte à reprendre les efforts statiques et dynamiques engendrés par le turboréacteur selon l'axe principal.

On entend ici par « matériau résistant à une température au moins égale à 1 000°C pendant une durée au moins égale à 15 minutes », un matériau qui, lorsqu'il est soumis à une température supérieure ou égale à 1 000°C, conserve une rigidité mécanique suffisante pour supporter le turboréacteur pendant une durée au moins égale à 15 minutes.

La structure primaire selon l'invention présente une fabrication plus aisée ainsi qu'un montage plus simple que celles de l'art antérieur. En effet, la structure de l'invention comporte un nombre moins élevé d'éléments constitutifs que l'art antérieur: deux blocs latéraux et une plaque centrale.

Le faible nombre d'éléments constitutifs permet également d'avoir un gain de masse de la structure de l'invention.

La présence de la plaque centrale permet d'améliorer la résistance du mât d'accrochage. En effet, la plaque centrale reprend les différents efforts statiques et dynamiques engendrés par le turboréacteur selon l'axe principal de la structure de l'invention, à savoir l'axe principal du mât d'accrochage.

Par ailleurs, en cas d'incendie, quel que soit le matériau employé pour fabriquer les blocs latéraux, la plaque centrale maintient le turboréacteur en étant par exemple reliée à l'attache avant en forme de pyramide liée au turboréacteur. En effet, la plaque centrale est fabriquée dans un matériau supportant une température au moins égal à 1 000°C, notamment au moins égal à 1 200°C, voire à 1 400°C pendant une durée au moins égale à 15 minutes, notamment à 20 minutes voire à 1 heure. De ce fait, le turboréacteur est supporté par la structure de l'invention durant un temps plus long que dans le cas de la demande de brevet FR 2 889 505.

La structure de l'invention permet donc de satisfaire la réglementation européenne JAA (Joint Aviation Authorities) et américaine FAA (Federal Aviation Administration) portant sur la sécurité incendie et notamment sur le temps minimal de support du turboréacteur avant rupture.

Selon d'autres caractéristiques de l'invention, la structure de l'invention comporte l'une ou plusieurs des caractéristiques optionnelles suivantes considérées seules ou selon toutes les combinaisons possibles :
- chaque bloc latéral comprend une paroi latérale s'étendant en un élément supérieur en L conformé pour venir sensiblement en regard de l'élément supérieur de l'autre bloc ;
- la structure de l'invention présente une section transversale sensiblement trapézoïdale définissant une base inférieure et une base supérieure ce qui permet de maintenir au mieux la plaque centrale et de limiter le nombre de pièces ;
- la largeur de la base inférieure est plus petite que la largeur de la base supérieure ce qui permet de limiter la quantité de matière des blocs latéraux ;
- le premier bloc et le deuxième bloc sont fabriqués dans une matière composite ce qui permet à la fois une fabrication de la structure primaire plus aisée par moulage, par exemple de type RTM, et un gain de masse pour le mât d'accrochage ;
- la plaque centrale comporte au moins deux tôles ondulées ce qui permet d'augmenter l'inertie de la plaque centrale ;
- la plaque centrale a une épaisseur comprise entre 15 mm et 30 mm ce qui permet d'obtenir un bon compromis entre un support optimal du turboréacteur en cas d'incendie de ce dernier et une masse pas trop importante ;
- une première chape et une deuxième chape sensiblement nervurées sont montées respectivement sur le premier bloc latéral et le deuxième bloc latéral pour relier la structure primaire à la voilure de l'aéronef ce qui permet de faciliter le montage et le démontage du groupe propulseur et également de supporter des charges lourdes telles qu'un turboréacteur ;
- la première chape et la deuxième chape sont métalliques ce qui permet d'assurer le maintient du turboréacteur même en cas d'incendie de ce dernier.

Selon un deuxième aspect, l'invention a également pour objet un mât d'accrochage destiné à rattacher un turboréacteur à une voilure d'un aéronef comportant une structure primaire selon l'invention.

L'invention sera davantage comprise à la lecture de la description non limitative qui va suivre, faite en référence aux figures ci-annexées.
- la figure 1 est une vue en perspective éclatée d'une structure primaire usuelle de l'art antérieur ;
- la figure 2 est une vue en perspective éclatée d'une structure primaire selon la demande de brevet FR 2 889 505 ;
- la figure 3 est une vue en perspective d'un mode de réalisation d'une structure selon l'invention ;
- la figure 4 est une vue en perspective éclatée du mode de réalisation de la figure 1 ;
- la figure 5 est une vue partielle de dessus d'un mode de réalisation de l'invention ;
- la figure 6 est une vue décalée agrandie de la zone VI du mode de réalisation de la figure 5.

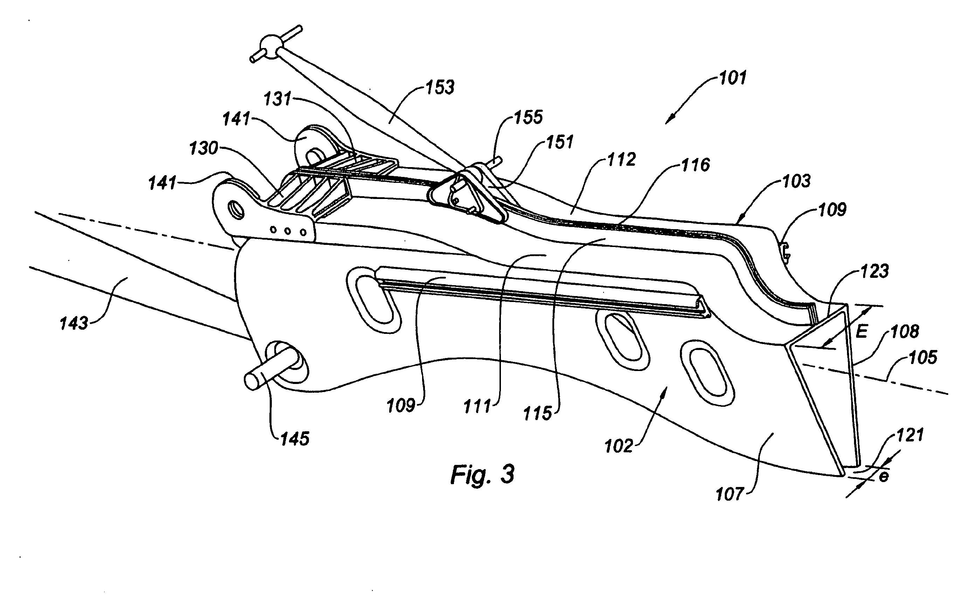

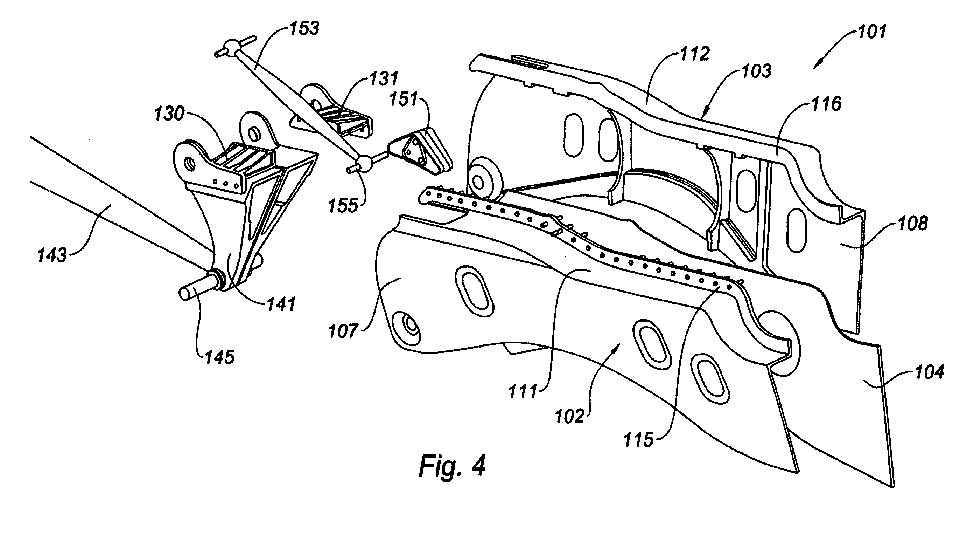

Selon le mode de réalisation représenté aux figures 3 et 4, la structure selon l'invention 101 comprend un premier bloc latéral 102 et un deuxième bloc latéral 103 enserrant une plaque centrale 104.

La structure de l'invention 101 est destinée à rattacher un turboréacteur (non représenté) à une voilure d'un aéronef (non représenté). Le mât d'accrochage (non représenté) comportant la structure de l'invention 101 peut supporter tout type de nacelles entourant le turboréacteur, notamment les nacelles structurantes comprenant une ou plusieurs supports de grilles intégré(s) au mât d'accrochage.

De manière avantageuse, la structure selon l'invention 101 présente un nombre d'éléments constitutifs plus faible que celles de l'art antérieur. On obtient ainsi une structure primaire avec un gain de masse résultant de l'absence d'une multitude de pièces, notamment de type renfort ou raidisseur.

Par ailleurs, le montage de ces éléments constitutifs est aisé dans la mesure où il suffit de joindre les premier 102 et deuxième 103 blocs latéraux pour former la structure selon l'invention 101. Contrairement à l'art antérieur, il n'est plus nécessaire de relier des pièces de petite taille entre elles ou avec des éléments plus importants pour former une structure primaire. Le montage de la structure selon l'invention 101 s'en trouve donc simplifié.

La structure de l'invention a une forme sensiblement allongée, à savoir que la longueur suivant un axe principal 105 est supérieure à la largeur suivant un axe sensiblement perpendiculaire à l'axe principal 105. Cet axe principal 105 est généralement le même que celui du mât d'accrochage.

De manière préférée, chaque bloc latéral 102 (103) comprend une paroi latérale 107 (108) s'étendant en un élément supérieur 111 (112) en L qui est conformé pour venir sensiblement en regard de l'élément supérieur 112 (111) de l'autre bloc latéral 102 (103).

Chaque paroi latérale 107 et 108 peut comprendre des moyens pour fixer des structures secondaires pour former le mât d'accrochage. A titre d'exemple, les moyens sont des rails 109 montés sur les parois 107, 108.

L'élément supérieur 111, 112 peut comporter, comme représenté aux figures 3 et 4, une lèvre 115, 116. Les lèvres 115 et 116 des éléments supérieurs sont destinées à venir bord à bord et à être fixées ensemble par tout moyen connu de l'homme du métier, notamment par des boulons.

De manière préférée, la structure de l'invention 101 présente une section transversale, c'est-à-dire perpendiculaire à l'axe principal 105, sensiblement trapézoïdale définissant une base inférieure 121 et une base supérieure 123. En entend ici par « trapézoïdale », une section présentant une base inférieure 121 et une base supérieure 123 sensiblement parallèles entre elles. Une telle forme géométrique permet de maintenir au mieux la plaque centrale 104 entre les blocs latéraux 102 et 103 et également de faire passer les câbles et tuyaux nécessaires au fonctionnement de la nacelle et du turboréacteur (non représentés). Selon un mode de réalisation préféré, la largeur e de la base inférieure 121 est plus petite que celle E de la base supérieure 123 ce qui permet de limiter la quantité de matériaux nécessaire à la fabrication des blocs latéraux 102 et 103. Typiquement, la largeur e de la base inférieure 121 est comprise entre 90 mm et 140 mm, notamment entre 100 mm et 120 mm. De même, la largeur E de la base supérieure 123 est typiquement comprise entre 260 mm et 340 mm, notamment entre 280 mm et 320 mm.

Le premier bloc latéral 102 et le deuxième bloc latéral 103 sont fabriqués préférentiellement dans une matière composite, telle que la résine bismaleimide (BMI), la résine époxy résistant à des températures supérieures à 200°C, notamment égales à environ 280°C, telle que la PMR15® ou en carbone. Un avantage d'utiliser un matériau composite est de faciliter la fabrication des blocs latéraux 102 et 103 et de réduire leur masse.

La fabrication des blocs latéraux 102 et 103 peut être réalisée par drapage ou par un procédé RTM (« Resin Transfer Molding »).

Le procédé de « drapage » consiste à placer dans un moule l'ensemble des fibres imprégnées de résine de sorte à former la préforme désirée puis à appliquer sensiblement le vide pour compacter l'ensemble. Ensuite, du chauffage est appliqué afin de faire fondre la résine contenue dans les fibres ce qui permet de faire le lien entre les fibres.

Le procédé RTM consiste à diffuser de la résine dans les fibres d'une préforme munie de couches fibreuses intercalaires. Plus précisément, on place l'ensemble comprenant les préformes fibreuses à l'intérieur d'un moule fermé dont la forme générale correspond à celle de la pièce mécanique à réaliser et on injecte une résine dans le moule. La résine pénètre alors l'ensemble formé par les préformes fibreuses.

Le procédé RTM est avantageux dans la mesure où il est peu cher, simple à mettre en oeuvre et offrant un matériau de bonne résistance mécanique.

De plus, la pièce issue du procédé RTM ne requiert qu'un minimum de finition. En effet, les pièces en sortie de moule sont en cotes finies, c'est-à-dire qu'elles ne nécessitent pas d'être usinées. Par ailleurs, le procédé RTM permet une répétitivité de la géométrie des pièces.

Les blocs latéraux 102 et 103 ont une forme sensiblement allongée. La longueur des blocs latéraux 102 et 103 suivant l'axe principal 105 est notamment comprise entre 2 050 mm et 2 600 mm, voire entre 2 200 mm et 2 400 mm.

La plaque centrale 104 a également une forme sensiblement allongée avec une longueur suivant l'axe principal 105 égale ou mieux inférieure à la longueur des blocs latéraux 102 et 103. L'épaisseur de la plaque centrale 104 suivant un axe sensiblement perpendiculaire à l'axe principal 105 est typiquement inférieure à la longueur de cette dernière. L'épaisseur de la plaque centrale 104 est généralement comprise entre 15 mm et 20 mm, notamment entre 15 mm et 25 mm, préférentiellement entre 15 mm et 30 mm, ce qui permet d'obtenir un bon compromis entre un support optimal du turboréacteur en cas d'incendie de ce dernier et une masse de la structure de l'invention 101 pas trop importante.

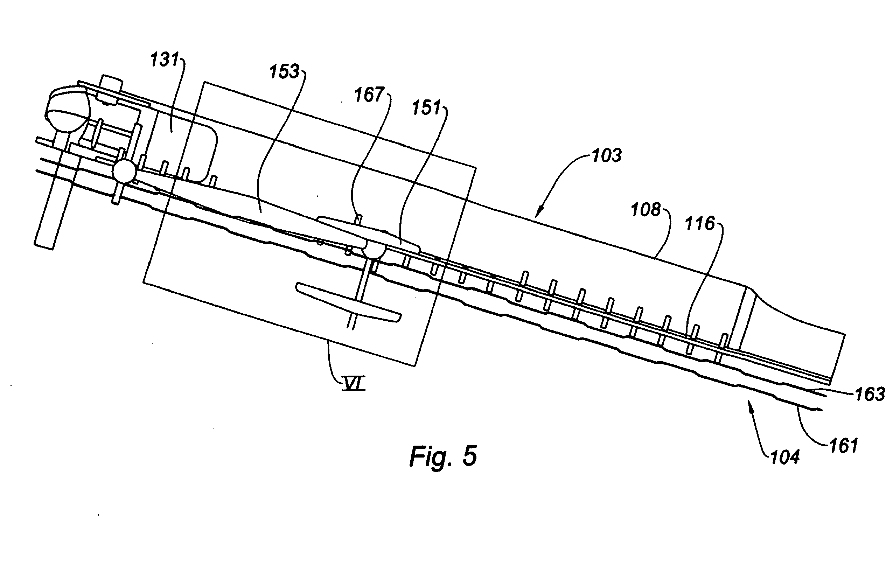

Selon un mode de réalisation préféré représenté à la figure 5, la plaque centrale 104 comporte deux tôles ondulées 161 et 163. Typiquement, les deux tôles 161 et 163 sont obtenues par soyage et soudage. De manière générale, la plaque centrale 104 peut comporter plus de deux tôles ondulées. Lors du montage de la structure de l'invention 101, les tôles ondulées 161 et 162 sont fixées par tout moyen connu de l'homme du métier de sorte que des cavités d'air soient définies au niveau de zones de contact. De ce fait, l'inertie thermique de la plaque 104 est améliorée. De plus, la présence de tôles ondulées 161 et 163 permet avantageusement de limiter la quantité de matière nécessaire à la formation de la plaque centrale 104 tout en assurant une rigidité suffisante pour supporter le turboréacteur en cas d'incendie.

La présence de la plaque centrale 104 permet d'obtenir une structure de l'invention 101 plus résistante aux efforts dynamiques et statiques. En effet, la plaque centrale 104 reprend les efforts statiques et dynamiques engendrés par le turboréacteur (non représenté) selon l'axe principal 105 de la structure selon l'invention 101.

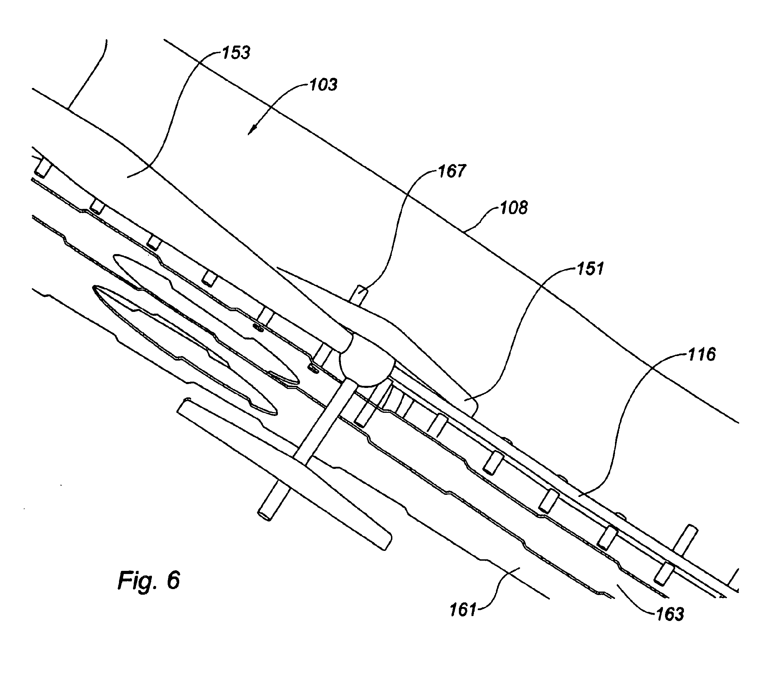

La plaque centrale 104 est typiquement reliée à une pièce d'attache (non représentée) métallique ou en tout autre matériau adéquate connu de l'homme du métier. La pièce d'attache, généralement en forme de pyramide, est destinée à être rattachée au turboréacteur. De plus, la plaque centrale 104 est rattachée par tout moyen connu de l'homme du métier, notamment par rivet 167, à une chape 151 reliant la structure de l'invention 101 à la voilure de l'aéronef (voir figure 6). Ainsi, en cas d'incendie où les températures sont au moins égales à 1 000°C, quelle que soit la nature du matériau utilisé pour fabriquer les blocs latéraux 102 et 103, la plaque centrale 104 permet de supporter le turboréacteur pendant une durée au moins égale à 15 minutes, notamment supérieure à 30 minutes, voire supérieure à 1 heure. Le turboréacteur est donc maintenu pendant une durée au moins égale à celle fixée par la norme européenne JAA et américaine FAA, ce qui correspond au temps nécessaire pour effectuer une éventuelle manoeuvre d'urgence.

La plaque centrale 104 est réalisée préférentiellement dans un matériau métallique ou dans un alliage, de préférence un alliage comportant du nickel. Un alliage comportant du nickel est par exemple de l'inconel®. De manière plus précise, l'inconel® est un alliage comprenant principalement du nickel, mais aussi d'autres métaux comme le chrome, le magnésium, le fer et le titane. On peut également citer l'inco625®, l'acier ou encore tout alliage comportant du niobium.

Dans le cas où les blocs latéraux 102 et 103 sont en carbone ou en matière composite, ils forment un bouclier thermique autour de la plaque centrale 104 du fait de la faible conductivité thermique du carbone et de la matière composite.

Selon un mode de réalisation préféré, une première chape 130 et une deuxième chape 131 sensiblement nervurées sont montées respectivement sur le premier bloc latéral 102 et le deuxième bloc latéral 103 pour relier la structure de l'invention 101 à une voilure de l'aéronef, non représentée. La présence de telles chapes 130 et 131 permet de faciliter le montage et le démontage du groupe propulseur lors de maintenances.

De manière préférée, la première chape 130 et la deuxième chape 131 sont métalliques ce qui permet d'assurer de lourdes charges comme le maintient du turboréacteur même en cas d'incendie de ce dernier.

De plus, les première et deuxième chapes 130 et 131 présentent un usinage des pièces plus aisé.

Les première et deuxième chapes 130 et 131 sont configurées pour recevoir un axe mobile en rotation d'une attache liant la structure de l'invention et la voilure de l'aéronef.

Les premières et deuxièmes chapes sont montées sur un élément support 141 amovible par rapport à la structure de l'invention 101. L'élément support reçoit une attache 143 qui relie la structure de l'invention 101 et la voilure de l'aéronef (non représentée). L'attache 143 est mobile autour d'un axe 145 sensiblement perpendiculaire à l'axe principal 105.

Par ailleurs, une chape 151 est montée sur les éléments supérieurs 111 et 112 de façon à recevoir une attache 153 reliant également la structure de l'invention 101 et la voilure de l'aéronef mais en une zone distincte de celle où est destinée à venir l'attache 143. L'attache 153 est également mobile en rotation autour d'un axe 155 sensiblement parallèle à l'axe 145.

La chape 151, comme représenté à la figure 6, est attachée à la plaque 104, ici sous la forme de deux tôles ondulées 161 et 163 par tout moyen de connu de l'homme du métier, notamment par rivet 167 ou par boulon.

## Revendications

1. Structure de reprise d'effort (101) d'un mât d'accrochage destiné à rattacher un turboréacteur à une voilure d'un aéronef, **caractérisée en ce qu'**elle est de forme sensiblement allongée selon un axe principal (105) et comprend un premier bloc latéral (102) et un second bloc latéral (103), lesdits premier bloc latéral (102) et second bloc latéral (103) étant destinés à être rattachés à la voilure de l'aéronef, et une pièce d'attache destinée à être rattachée au turboréacteur,
lesdits blocs latéraux (102, 103) enserrant une plaque centrale (104) de forme sensiblement allongée suivant l'axe principal (105) de ladite structure (101) et ladite plaque (104) étant reliée à ladite pièce d'attache, la plaque centrale (104) étant fabriquée dans un métal ou un alliage comprenant du nickel apte à résister à une température au moins égale à 1000°C pendant une durée au moins égale à 15 minutes, de sorte à reprendre les efforts statiques et dynamiques engendrés par le turboréacteur selon l'axe principal (105).

2. Structure (101) selon la revendication précédente, **caractérisée en ce que** chaque bloc latéral (102, 103) comprend une paroi latérale (107, 108) s'étendant en un élément supérieur (111, 112) en L conformé pour venir sensiblement en regard de l'élément supérieur (112, 111) de l'autre bloc (103, 102).

3. Structure (101) selon l'une quelconque des revendications précédentes, **caractérisée en ce qu'**elle présente une section transversale sensiblement trapézoïdale définissant une base inférieure (121) et une base supérieure (123).

4. Structure (101) selon la revendication précédente, **caractérisée en ce que** la largeur (e) de la base inférieure (121) est plus petite que la largeur (E) de la base supérieure (123).

5. Structure (101) selon l'une quelconque des revendications précédentes, **caractérisée en ce que** le premier bloc (102) et le deuxième bloc (103) sont fabriqués dans une matière composite.

6. Structure (101) selon l'une quelconque des revendications précédentes, **caractérisée en ce que** la plaque centrale (104) comporte au moins deux tôles ondulées (161 ; 163).

7. Structure (101) selon l'une quelconque des revendications précédentes, **caractérisée en ce que** la plaque centrale (104) a une épaisseur comprise entre 15 mm et 30 mm.

8. Structure (101) selon l'une quelconque des revendications précédentes, **caractérisée en ce qu'**une première chape (130) et une deuxième chape (131) sensiblement nervurées sont montées respectivement sur le premier bloc latéral (102) et le deuxième bloc latéral (103) pour relier la structure primaire (101) à la voilure de l'aéronef.

9. Structure (101) selon la revendication précédente, **caractérisée en ce que** la première chape (130) et la deuxième chape (131) sont métalliques.

10. Mât d'accrochage destiné à rattacher un turboréacteur à une voilure d'un aéronef comportant une structure de reprise d'effort (101) selon l'une quelconque des revendications précédentes.

## Claims

1. A load-spreading structure (101) of an attachment pylon intended for attaching a jet turbine engine to a wing of an aircraft, **characterized in that** it has a substantially elongated shape along a axis (105) and comprises a first side block (102) and a second side block (103), said first side block (102) and second side block (103) being intended to be attached to the wing of the aircraft, and an attachment part intended to be attached to the jet turbine engine,
said side blocks (102,103) clasping a central place (104) with a substantially elongated shape along the main axis (105) of said structure (101) and said place (104) being connected to said attachment part, the central plate (104) being made in a metal or alloy comprising nickel, capable of resisting to a temperature at least equal to 1,000° C for a duration at least equal to 15 minutes, so as to spread out the static and dynamic forces generated by the jet turbine engine along the main axis (105).

2. The structure (101) according to the preceding claim, **characterized in that** each side block (102, 103) comprises a side wall (107, 108) extending into an upper L-shaped element (111,112), shaped so as to be substantial facing the upper element (112, 111) of the other block (103,102).

3. The structure (101) according to any of the preceding claims, **characterized in that** it has a substantially trapezoidal cross-section defining a lower base (121) and an upper base (123).

4. The structure (101) according to the preceding claim, **characterized in that** the width (e) of the lower bass (121) is smaller than the width (E) of the upper base (123).

5. The structures (101) according to any of the preceding claims, **characterized in that** the first block (102) and the second block (103) are made in a composite material.

6. The structure (101) according to any of the preceding claims, **characterized in that** the central plate (104) includes at least two corrugated metal sheets (161,163).

7. The structure (101) according to any of the preceding claims, **characterized in that** the central plate (104) has a thickness comprised between 15 mm, and 30 mm.

8. The structure (101) according to any of the preceding claims, **characterized in that** a first fork (130) and a second fork (131) which are substantially ribbed are respectively mounted on the first side block (102) and the second side block (103) for connecting the primary structure (101) to the wing of the aircraft.

9. The structure (101) according to the preceding claim, **characterized in that** the first fork (130) and the second fork (131) are metal.

10. An attachment pylon intended for attaching a jet turbine engine to a wing of an aircraft including a load-spreading structure (101) according to any of the preceding claims.

## Patentansprüche

1. Struktur zur Kraftübertragung (101) einer Verbindungsstrebe, die dazu bestimmt ist, ein Turbotriebwerk mit einem Flügel Luftfahrzeugs zu verbinden, **dadurch gekennzeichnet, dass** sie eine etwa längliche Form gemäß einer Hauptachse (105) hat und einen ersten seitlichen Block (102) und einen zweiten seitlichen Block (103) umfasst, wobei der erste seitliche Block (103) und zweite Block (102) dazu bestimmt sind, mit dem Flügel des Luftfahrzeugs verbunden zu sein, und ein Verbindungsteil, das dazu bestimmt ist, mit dem Turbotriebwerk verbunden zu sein,
wobei die seitlichen Blöcke (102, 103) eine zentrale Platte (104) etwa länglicher Form (101) gemäß der Hauptachse (105) der Struktur umschließen und die Platte (104) mit dem Verbindungsteil verbunden ist, wobei die zentrale Platte (104) aus einem Metall oder einer Hergestellt ist, die nickel die imstande ist, einer Temperatur von mindestens gleich 1000 °C während einer Dauer von mindestens gleich 15 Minuten zu widerstehen, so dass die statischen und dynamischen Kräfte, die vom Turbotriebwerk erzeugt werden, gemäß der Hauptachse (105) übertragen werden.

2. Struktur (101) nach vorangehendem Anspruch, **dadurch gekennzeichnet, dass** jeder seitliche Block (102, 103) Seitenwand (107, 108) umfasst, die sich in ein oberes Element (111, 112) in L-Form erstreckt, das ausgebildet ist, um sich etwa gegenüber dem oberen Element (112, 111) des anderen Bocks (103,102) zu erstrecken.

3. Struktur (101) nach einem der vorangehenden Ansprüche, **dadurch gekennzeichnet, dass** sie einen Querschnitt aufweist, der etwa trapezförmig ist und eine untere Basis (121) und eine obere Basis (123) definiert.

4. Struktur (101) nach vorangehendem Anspruch, **dadurch gekennzeichnet, dass** die Breite (e) der unteren Basis (121) kleiner ist als die Breite (E) der oberen Basis (123).

5. Struktur (101) nach einem der vorangehenden Ansprüche, **dadurch gekennzeichnet, dass** der erste Block (102) und der zweite Block (103) aus einem Verbundmaterial hergestellt sind.

6. Struktur (101) nach einem der vorangehenden Ansprüche, **dadurch gekennzeichnet**, die zentrale Platte (104) mindestens zwei Wellbleche (161; 163) aufweist.

7. Struktur (101) nach einem der vorangehenden Ansprüche, **dadurch gekennzeichnet, dass** die zentrale (104) eine Dicke zwischen 15 mm und 30 mm inklusive hat.

8. Struktur (101) nach einem der vorangehenden Ansprüche, **dadurch gekennzeichnet, dass** eine deutlich gerippte erste Befestigung (130) und eine deutlich gerippte befestigung (131) jeweils auf dem ersten seitlichen Block (102) und dem zweiten seitlichen Block (103) montiert sind, um die primäre Struktur (101) mit dem Flügel des Luftfahrzeugs zu verbinden.

9. Struktur (101) nach vorangehendem Anspruch, **dadurch gekennzeichnet, dass** die erste Befestigung (130) und die zweite Befestigung (131) metallisch sind.

10. Verbindungsstrebe, die dazu bestimmt ist, ein Turbotriebwerk mit einem Flügel eines Luftfahrzeugs zu verbinden, die eine Struktur zur Kraftübertragung (101) nach einem der vorangehenden Ansprüche aufweist.
